**Europäisches Patentamt**

**European Patent Office**

**Office européen des brevets**

(11) Numéro de publication: **0 147 300**
**B1**

## FASCICULE DE BREVET EUROPÉEN

(45) Date de publication du fascicule du brevet:
08.06.88

(51) Int. Cl.⁴: **G 06 K 11/06**

(21) Numéro de dépôt: **84402624.5**

(22) Date de dépôt: **18.12.84**

(54) Procédé et dispositif de détermination des coordonnées d'un point de contact sur une surface sensible semi-analogique.

(30) Priorité: **26.12.83 FR 8320793**

(43) Date de publication de la demande:
**03.07.85 Bulletin 85/27**

(45) Mention de la délivrance du brevet:
**08.06.88 Bulletin 88/23**

(84) Etats contractants désignés:
**AT BE CH DE FR IT LI LU NL SE**

(56) Documents cité:
**EP-A-0 085 012**
**US-A-3 806 912**
**US-A-4 164 622**

**PATENTS ABSTRACTS OF JAPAN, vol. 7, no. 192, 23 août 1983, page 6 P 218; & JP - A - 58 90 236 (SONY K.K.) 28-05-1983**
**PATENTS ABSTRACTS OF JAPAN, vol. 7, no. 188, 17 août 1983, page 54 P 217; & JP - A - 58 87 677 (TOKYO SHIBAURA DENKI K.K.) 25-05-1983**

(73) Titulaire: **REGIE NATIONALE DES USINES RENAULT, Boîte postale 103 8-10 avenue Emile Zola, F-92109 Boulogne- Billancourt (FR)**

(72) Inventeur: **Bosquain, Denis, 69, avenue de la République, F-92500 Rueil Malmaison (FR)**
Inventeur: **Salvador, Jean- Louis, 20, rue Bordier, F-93300 Aubervilliers (FR)**

(74) Mandataire: **Colas, Jean- Pierre, Régie Nationale des Usines RENAULT 8 et 10 Avenue Emile Zola, F-92109 Boulogne- Billancourt (FR)**

**Description**

L'invention concerne un procédé et un dispositif de détermination des coordonnées d'un point de contact sur une surface sensible semi-analogique de type résistif.

On connait, notamment par le brevt FR-A-2 520 498, qui correspond au document EP-A-20 085 072 des surfaces sensibles du type constitué par un support, généralement une plaque de verre, sur lequel sont disposées, d'une part une grille constituée par deux bornes entre lesquelles sont montées en parallèle un certain nombre de bandes résistantes émettrices, et d'autre part des bandes détectrices conductrices intercalées avec les précédentes et connectées séparément à un moyen de sélection pour prélever successivement la tension de chaque bande détectrice. Les bandes résistances émettrices ainsi que les bandes détectrices conductrices, qui peuvent également être plus ou moins résistantes, sont constituées le plus souvent par un émail conducteur mince déposé sur la plaque de verre. Lorsqu'un objet conducteur, par exemple un simple doigt, vient appuyer sur cette surface sensible, il met en contact mutuel au moins une bande détectrice avec au moins une bande émettrice de la grille, ce qui permet, en explorant les diverses bandes à l'aide du sélecteur, de déterminer par voie numérique l'une des coordonnées, qui est le numéro de la bande détectrice où est détectée une tension, et par voie analogique l'autre coordonnée par la valeur de cette tension.

De préférence, comme décrit dans la demande de brevet français précitée, on polarise alternativement lesdites bandes émettrices dans un premier sens et dans le sens opposé, on effectue, pour les deux sens de polarisation des bandes émettrices, un certain nombre de mesures de la tension de chaque bande détectrice dont on calcule séparément les moyennes, et on déduit les coordonnées dudit objet de la comparaison des moyennes obtenues.

Bien qu'un tel procédé permette de résoudre un grand nombre des problèmes que présenta l'exploitation des surfaces sensibles du type précité, certaines difficultés de mise en oeuvre pratique subsistent:

1) la résistance électrique de contact de la peau à l'extrémité du doigt de l'opérateur est très variable et le plus souvent élevée (50 k$\Omega$ à 1 M$\Omega$), et ne saurait tolérer que le passage d'un courant de très faible intensité entre la grille et la bande détectrice. On ne peut donc utiliser qu'une détection à très haute impédance.

2) Pour d'évidentes raisons de sécurité de l'utilisateur, il n'est permis d'utiliser que de très basses tensions d'exitation. Or le corps de l'utilisateur conduit, jusqu'au bout du doigt en contact, des potentiels électriques continus, par contact avec un autre point du circuit ou par électricité statique, et surtout alternatifs par effet d'antenne avec le parasitage ambiant. La combinaison de ces deux effets rend délicate l'obtention d'un rapport signal/bruit favorable, et par conséquent de mesures précises.

3) La variabilité du signal utile par rapport à un bruit de fond constant conduit à des variations relatives extrêmement variables sur l'étendue de la surface, notamment dans le sens de la mesure analogique à l'approche du zéro.

4) Enfin l'exploration des diverses bandes par le sélecteur et l'exécution des diverses mesures peut prendre un temps important, peu pratique pour l'utilisateur, si l'on met en oeuvre les techniques de filtrage classiques.

L'invention vise à fournir un procédé et un dispositif qui permettent de surmonter les difficultés ci-dessus que l'on rencontre dans l'exploitation des surfaces sensibles du type précité, c'est-à-dire qui satisfassent à tous les impératifs de sécurité, de précision et de rapidité.

Dans le procédé selon la revendication 1 on utilise un signal d'horloge d'une fréquence appropriée fournissant une tension en créneaux, puis dans un premier temps on polarise les deux bornes de la grille en concordance de phase avec ce signal d'horloge, on réalise un échantillonnage synchrone de la tension de chaque bande détectrice, alternativement pour les périodes d'interruption et d'établissement du signal d'horloge, on effectue les moyennes d'un certain nombre d'échantillons, séparément pour les périodes d'interruption et d'établissement, on compare les deux moyennes ainsi obtenues pour détecter s'il y a contact et déterminer la coordonnée numérique par le numéro de la bande où est détecté le contact, puis dans un deuxième temps, en restant commuté sur cette même bande détectrice ainsi détectée, on polarise les deux bornes de la grille en opposition de phase entre elles par le signal d'horloge, de manière à créer dans chaque bande résistante émettrice un courant alternativement dans un sens et dans le sens opposé, on réalise un échantillonnage synchrone de la tension de ladite bande détectrice, alternativement pour les deux sens de courant, on effectue la moyenne d'un certain nombre d'échantillons, séparément pour les deux sens de courant, et enfin la différence de ces moyennes qui sert à calculer la coordonnée analogique.

L'invention selon la revendication 9 à également pour objet un dispositif de mise en oeuvre du procédé défini ci-dessus pour le détermination des coordonnées X, Y d'une zone de contact d'un corps conducteur tel qu'un doigt sur une surface sensible semi-analogique constituée d'une part par une grille formée de deux bornes entre lesquelles sont montées en parallèle un certain nombre de bandes résistantes émettrices et d'autre part de bandes détectrices intercalées avec les bandes émettrices et réuni es séparément à un moyen de sélection de bande , dispositif caractérisé par le fait qu'il comporte un générateur de signal d'horloge, des moyens formant commutateurs inverseurs susceptibles de commuter chacune des deux bornes de la grille respectivement sur une tension de polarisation et à la masse, ces moyens formant commutateurs inverseurs étant commandables séparément en phase et en opposition de phase par le signal d'horloge, un dispositif d'échantillonnage synchrone avec le signal d'horloge, un dispositif d'élaboration de la moyenne sur un certain nombre d'échantillons, séparément pour les deux alternances du signal d'horloge, et un dispositif logique qui commande les moyens formant commutateurs inverseurs, ainsi que le moyen de sélection de bande et le dispositif d'échantillonnage, opère le comptage des échantillons et détermine les valeurs des deux coordonnées X, Y.

D'autres particularités de l'invention apparaîtront à la description qui va suivre d'un mode de mise en oeuvre et de réalisation pris comme exemples et représentés sur le dessin annexé sur lequel:

- la figure 1 représente le schéma général de commutation :
- les figures 2 à 4 des courbes représentatives de tension en fonction du temps, relatives à la détermination de la coordonnée numérique ;
- les figures 5 et 6 sont des schémas électriques simplifiés montrant la détermination de la coordonnée analogique;
- la figure 7 représente des courbes illustrant cette détermination;
- la figure 8 est l'organigramme général du procédé;
- la figure 9 le schéma global d'un dispositif entièrement numérique;
- la figure 10 le schéma modifié pour le traitement analogique des moyennes;
- la figure 11 un schéma de détail d'une des réalisations de moyenneurs analogiques;
- la figure 12 les courbes de tension en fonction du temps illustrant le fonctionnement du dispositif de la figure 11 ; et
- les figures 13 et 14 des courbes correspondant à la mise en oeuvre de ces dispositifs dans l'invention.

Dans tout ce qui suit on appellera Y la coordonnée numerique (numéro de bande) et X la coordonnée analogique (position sur la bande). Comme avec le procédé classique, on va déterminer successivement Y et X, en s'efforçant d'éliminer les effets parasites.

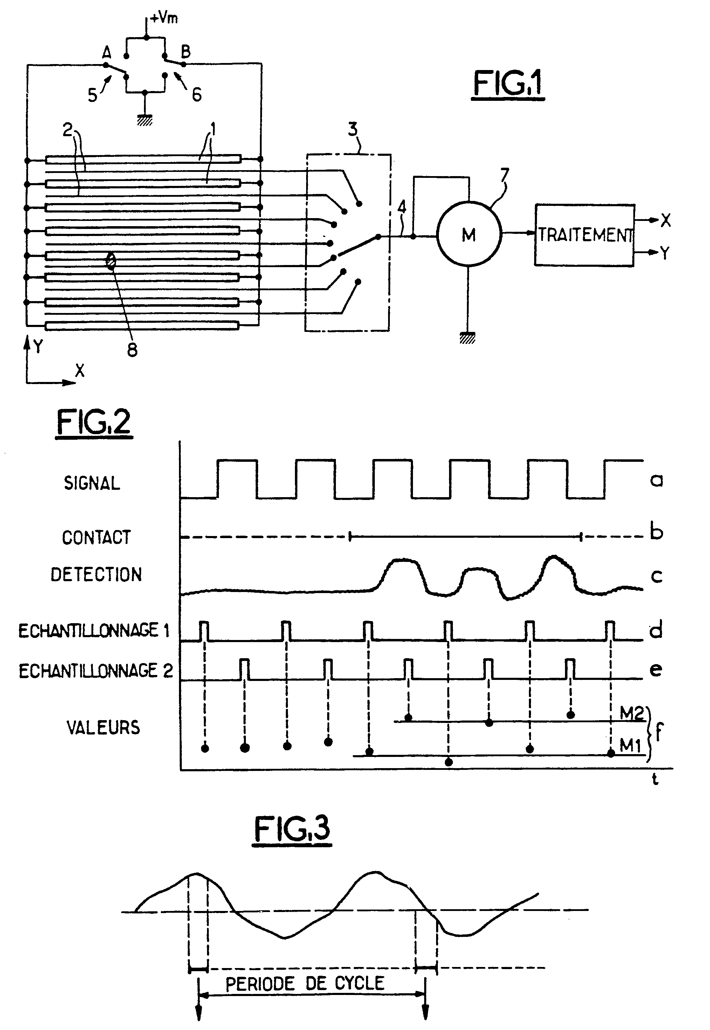

Sur la figure 1 on a représenté schématiquement par 1 les bandes résistances, et par 2 les bandes détectrices conductrices. Les bandes résistances 1 sont toutes connectées en parallèle entre deux bornes A et B pour constituer le grille, tandis que toutes les bandes détectrices 2 sont connectées, chacune individuellement, aux diverses entrées d'un moyen de sélection 3 qui permet de prélever en sortie 4 successivement chacune des tensions des bandes 2.

Alors qu'avec le dispositif habituel une borne, par exemple A, est constemment connectée au potentiel zéro, alors que l'autre borne B est connectée à une source de tension continue, dans le cas de l'invention au contraire on utilise deux inverseurs 5 et 6 ou un ensemble équivalent de quatre commutateurs électronique simples, pour assurer la connexion de A et de B séparément, respectivement à la tension continue +Vm et à la masse, comme illustré sur la figure 1.

Ce dispositif de commutation permet donc quatre combinaisons de connexion :

1) A et B à la masse,
2) A et B à la tension +Vm,
3) A à la masse et B à +Vm (cas de la figure 1),
4) A à +Vm et B à la masse.

Les deux premières combinaisons vont être effectivement utilisées dans la première phase du procédé (détermination de Y) et les deux dernières dans la deuxième phase du procédé (détermination de X).

Conformément à l'invention, on utilise un signal d'horloge, produit par un dispositif usuel non représenté, et d'une fréquence aussi élevée que possible. Ce signal d'horloge se présente sous la forme d'une courbe de tension en créneaux telle que représentée sur la figure 2a. Ce signal d'horloge est utilisé pour commander le basculement des inverseurs A et B, alternativement dans les deux premières positions indiquées plus haut :

les périodes d'interruption du signal d'horloge (niveau zéro) produisent la connexion de A et B à la masse, tandis que les périodes d'établissement (niveau 1) produisent la connexion de A et B à la tension +Vm.

En même temps on suppose que le sélecteur 3 est pour l'instant positionné sur une bande déterminée. La figure 2b illustre par un segment en trait plein la durée du contact d'un doigt sur cette bande, ce qui se traduit par une conduction sur plusieurs signaux d'horloge.

La figure 2c montre approximativement le signal obtenu dans l'appareil de mesure représenté schématiquement en 7 sur la figure 1 tant qu'il n'y a pas contact, ce signal présente simplement l'action des parasites captés par la grille, alors que dans la zone correspondant au segment 2b on a un niveau plus important lorsque A et B sont connectés à Vm que lorsque A et B sont connectés à la masse, encore que dans ce cas le niveau de bruit est plus élevé à cause du captage des parasites ambiant par le corps de l'utilisateur.

A partir de cette courbe très parasitée, on va conformément à l'invention extraire un signal précis en utilisant un double échantillonnage en synchronisme avec le signal d'horloge, l'échantillonnage 1 correspondant à une courte durée, environ 1 ms, à l'intérieur des périodes d'interruption du signal d'horloge, tandis que l'échantillonnage 2 correspond également à des courtes périodes de temps de durée semblable à l'intérieur des périodes d'établissement du signal d'horloge. Ces échantillonnages selon les figures 2d et 2e, appliqués à la courbe 2c, permettent d'obtenir des mesures représentées par des points sur la figure 2f, la hauteur de chaque point dans le sens des ordonnées correspondant au niveau de la assure effectuée sur l'échantilton considéré.

On voit alors que si l'on effectue séparément la moyenne des échantillons impairs et des échantillons pairs, on obtient des valeurs pratiquement confondues lorsque l'on est en dehors de la zone de contact, et des valeurs M1 et M2 relativement différentes dans la zone de contact.

Lorsque les moyennes M1 et M2 sur un nombre déterminé d'échantillons (par exemple une dizaine) diffèrent d'une quantité supérieure à un seuil fixé à l'avance, on peut alors dire que l'on a détecté la présence d'un contact avec une bonne certitude. Si au contraire le test négatif, c'est-à-dire si la différence est inférieure au seuil, on incrémente le sélecteur 3 pour passer à la bande détectrice suivante.

Il est connu que pour une détection synchrone on doit choisir la fréquence du signal excitateur de telle manière qu'elle ne soit ni un multiple ni un sous-multiple de la fréquence des parasites ambiants les plus indésirables. Cette contrainte peut difficilement être satisfaite si les parasites ont une fréquence très basse, comme c'est le cas notamment des parasites indiuits par le secteur de distribution. Pour cette raison on utilise selon un mode de réalisation de l'invention, une autre ressource qui est de jouer sur la durée des tests et donc sur la fréquence du cycle de balayage. On voit par exemple sur la figure 3 une courbe représentative d'un niveau de parasites à 50 Hz, les segments placés en dessous représentent l'occurrence et la durée du test correspondant à unebande détectrice particulière. On voit que si le premier passage conduit à un test négatif par suite d'un bruit maximal, le deuxième passage donnera un test exploitable car le niveau de bruit sera minimal.

Pour obtenir ce résultat on utilise selon l'invention une fréquence de cycle choisie parmi les termes de la série :

$$2. \, Fr/(n + 1/2)$$

où Fr est la fréquence du réseau et n un entier positif ou nul, c'est-à-dire dans le cas du 50 Hz le plus courant, les valeurs suivantes :

200 hz, 67 Hz, 40 Hz,...

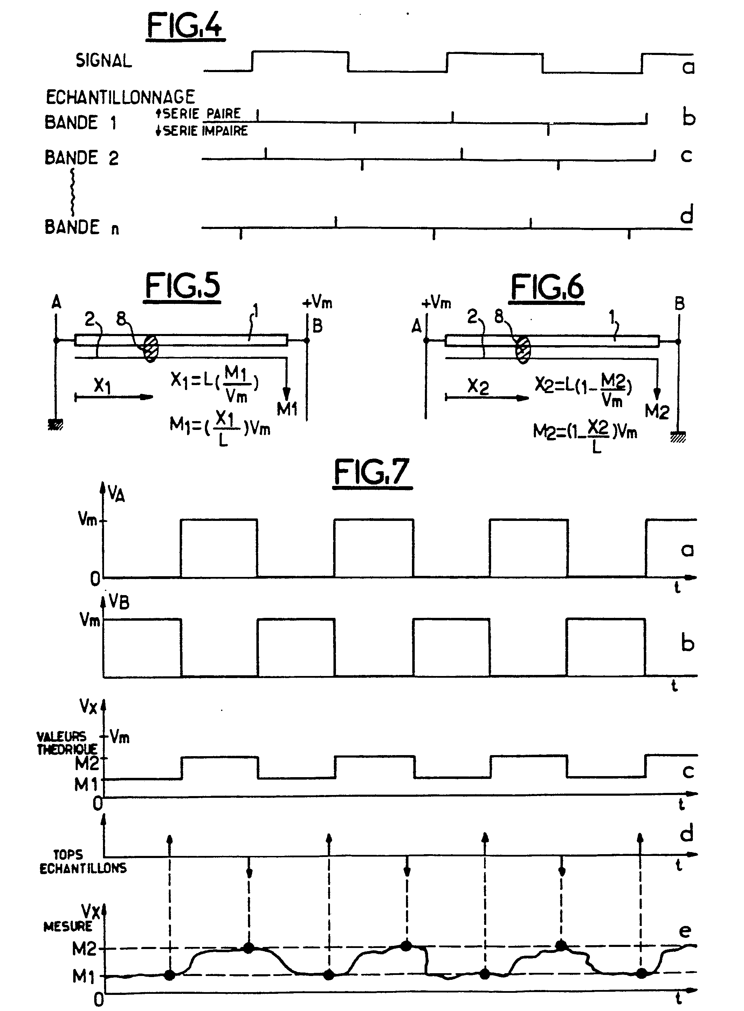

On peut arriver à un résultat équivalent à celui du procédé qui vient d'être exposé en balayant les bandes détectrices très rapidement, pendant une alternance du signal d'horloge. Il faut alors dans ce cas mettre en mémoire en parallèle les séries d'échantillons de chacune des bandes détectrices séparémment, pour permettre le calcul des moyennes relatives à chacune de ces bandes. Les même considérations sur les fréquences d'excitation et de balayage s'appliquent. Ou voit sur la figure 4 l'échelonnement caractéristique des divers échantillonnages qui ont été regroupés sur une même ligne pour les échantillonnages pairs et impairs de chaque bande.

Ou peut également combiner les deux procédés précédents en regroupant les bandes détectrices par paquets, traités selon la variante qui précède. Ceci permet de rechercher le meilleur compromis entre la vitesse et le taille de mémoire dans le cas de très grandes surfaces impliquant un nombre de bandes élevé.

Le numéro de la bande détectrice en contact étant repéré, le processus continue en laissant le sélecteur 3 connecté sur cette même bande repérée pour procéder à la mesure de la coordonnée analogique X. Pour cela on continue à commander les inverseurs 5 et 6 par le signal d'horloge, mais en opposition de phase, c'est-à-dire les deux derniers des quatre combinaisons examinées plus haut. Par exemple on peut mettre A en phase avec le signal d'horloge et B en opposition de phase avec ce signal d'horloge comme représenté sur les courbes 7a et 7b.

La figure 5 montre schématiquement une bande résistante 1 et une bande détectrice 2 isolées dans le cas du raccordement avec A à la masse, et la figure 6 le schéma équivalent dans le cas où B est à la masse. Sur ces figures la surface hachurée 8 représente l'aire de contact du doigt, qui joint en fait le rôle du curseur d'un potentiomètre constitué par la résistance 1 montée entre A et B, et dont la bande détectrice 2 assure la transmission de la tension (quelle que soit sa propre résistance).

Dans le cas de la figure 5, comme indiqué dans le brevet FR-A-2 520 498, on peut montrer que la tension mesurée M1 s'exprime en fonction de l'abscisse X1 par :

$$M1 = \frac{X1}{L} \, Vm \text{ ou encore } X1 = L \left( \frac{M1}{Vm} \right)$$

de même dans le cas de la figure 6, on peut montrer que :

$$X2 = L \left( 1 - \frac{M2}{Vm} \right) \text{ ou } M2 = \left( 1 - \frac{X2}{L} \right) Vm$$

Ces formules montrent que si le contact était précis, ponctuel et non parasité, et qu'on ait par conséquent X1 = X2, on aurait M1 + M2 Vm. Par suite des parasites variables, il n'en est généralement pas ainsi et les valeurs obtenues pour X1 et X2 sont différentes. On est conduit alors à faire la moyenne entre X1 et X2, ce qui donne comme valeurs :

$$X = \frac{1}{2} \left( 1 - \frac{M2 - M1}{V_m} \right)$$

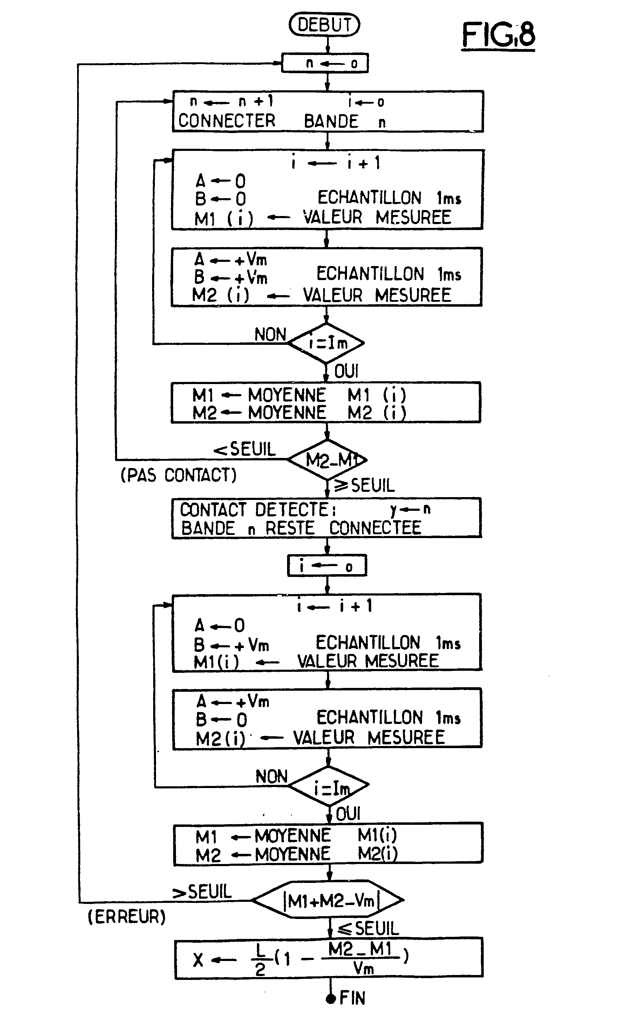

Comme dans la première phase du procédé, M1 et M2 sont encore obtenus par e'chantillonnage synchrone et par exécution de moyennes séparées sur un certain nombre de mesures (une dizaine par exemple) pour éliminer au maximum les effet parasites. En outre, on dispose ici d'un critère de validité particulièrement simple qui consiste à vérifier si la somme M1 + M2 - Vm est en valeur absolue inférieure à un seuil d'erreur tolérable. S'il en est ainsi la mesure est validée, sinon on recommence l'opération de mesure, comme cela apparaît clairement sur l'organigramme de la figure 8. Ce critère de validité est particulièrement efficace contre les perturbations à très basse fréquence qui ont pour effet de déplacer les deux moyennes M1 et M2 dans le même sens pendant la séquence d'échantillonnage.

Il est à noter que la formule de calcul de X ainsi rendue symétrique présente l'avantage de masquer les effets d'extrémité où les tensions à mesurer sont quasi nulles et de ce fait très sensibles aux perturbation.

L'invention part donc toujours d'une surface sensible semi-analogique du type connu pour aboutir à deux valeurs numériques X et Y. Dans tous les cas également, et dans les phases successives du procédé, on procède à un échantillonnage sur plusieurs valeurs successives de la même grandeur, et on élabore ensuite la moyenne de ces valeurs, séparémment pour les mesures paires et impaires

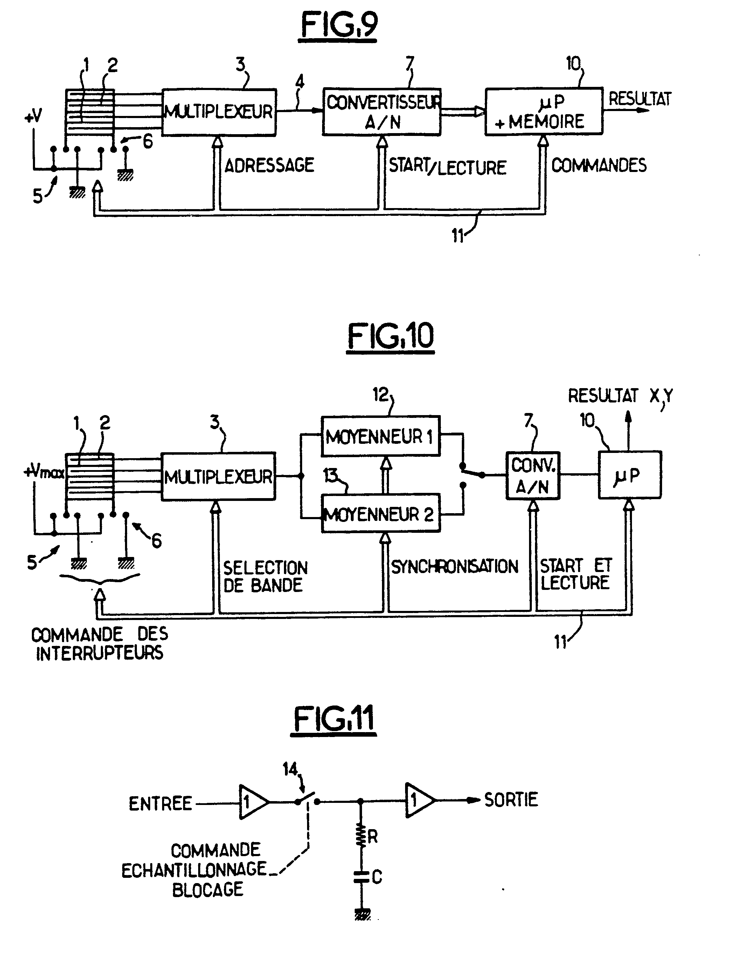

Cependant plusieurs variantes sont possibles qui diffèrent entre elles par la manière d'élaborer ces moyennes. Dans le mode de réalisation de la figure 9, on retrouve la surface sensible 1, 2 et ses deux inverseurs 5 et 6, ainsi que le sélecteur 3 constitué avantageusement par un multiplexeur électronique. Le dispositif de mesure 7 de la figure 1 est constitué dans ce cas par un convertisseur analogique/numérique qui transforme chaque tension de la ligne 4 en une mesure numérique, puis un microprocesseur 10 doté d'une mémoire et qui assure la sommation numérique des diverses valeurs M1 (i) et M2 (i) en vue de calculer par division arithmétique les moyennes M1 et M2, qui sont ensuite traitées pour l'élaboration de Y et X selon l'organigramme de la figure 8. Ce microprocesseur peut également être doté du générateur de signal d'horloge et assurer par lui-même les commandes des inverseurs 5 et 6, du multiplexeur 3 et du convertisseur 7 comme représenté schématiquement par la connexion 11 sur la figure 9,

Dans le mode de réalisation de la figure 10, on retrouve les mêmes éléments, jusqu'à la ligne de mesure 4 sortant du multiplexeur 3, mais ce mode de réalisation diffère par la manière d'élaborer la moyenne des mesures. En effet dans ce cas on utilise deux moyenneurs 12 et 13, affectés respectivement aux valeurs M1 et M2, et qui d'une part opèrent par voie analogique pour effectuer la moyenne du signal correspondant, et d'autre part sont disposés en amont du convertisseur analogique numérique 7, lequel de ce fait ne convertit en mesure numérique que le résultat final des moyennes analogiques, le reste étant semblable au cas de la figure 9, excepté que le microprocesseur 10 se trouve déchargé d'une partie importante de mémoire.

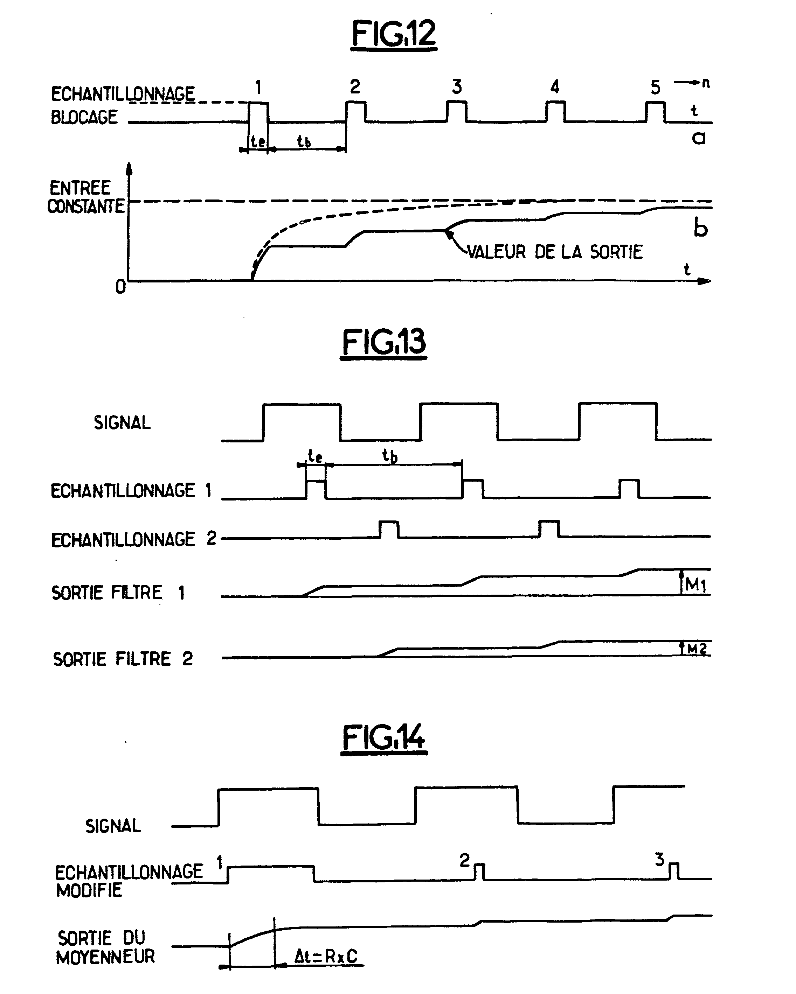

Pour réaliser les moyenneurs analogiques 12 et 13, on peut simplement utiliser des filtres passe-bas, ou encore des circuits tels que le circuit échantillonneur-bloquer représenté sur la figure 11 et qui assure la charge de la capacité C à travers la résistance R, seulement pendant les temps très courts d'échantillonnage où le commutateur électronique 14 se trouve fermé. En dehors des périodes d'échantillonnage, la capacité C reste chargée à une valeur constante. Le fonctionnement de ce schéma est représenté sur la figure 12 où l'on voit en 12a la courbe des impulsions d'échantillonnage et en 12b la tension de sortie du dispositif; celle-ci reflète en l'amplifiant la tension du condensateur C qui suit une courbe de charge en escalier, en supposant le condensateur C initialement déchargé.

Ou peut noter que ce circuit se comporte comme une cellule passe-bas RC de propriétés connues. Si te représente la durée du top d'échantillonnage et tb la période du blocage (repos), la durée d'une prise de moyenne sur n échantillon est donc n (te + tb). La constante de temps de la cellule RC équivalente est de RC (te - tb)/te. Il est donc possible d'obtenir de bons filtrages avec des composants R et C petits par le seul jeu du rapport cyclique te/tb, Pour un bon fonctionnement du circuit on choisit de préférence

$$te < RC$$
$$n.te > 3\,RC$$

Il faut remarquer que la constante de temps du filtre peut être modifiée par le programme de commande en agissant sur les durées te et tb, sans retoucher aux composants physiques R et C. En particulier il est possible d'adopter des jeux de paramètre (n, te, tb) différents pour la détection (Y) et la mesure (X) afin d'optimiser dans chaque cas le rapport entre la réjection du bruit et le temps global de réaction. Ce réglage est naturellement indépendant de celui de la fréquence d'échantillonage qui doit être fait selon les indications données plus haut pour une bonne réjection du bruit ambiant.

L'application de ce type de moyenneur analogique au procédé et au dispositif selon l'invention est représenté sur les figures 13 et 14 où l'on voit respectivement en 13a le signal d'horloge, en 13b et 13c respectivement les tops d'échantillonnage, et enfin en 13d et 13e respectivement les sorties des deux filtres correspondant respectivement aux deux mesures M1 et M2.

A titre exemple, on peut adopter les valeurs suivantes :

$$te = 50\mu$$
$$tb = 300\,\mu$$
fréquence d'échantillonnage = 2,8 kHz

$$n = 20$$
$$R.C. = 100\,\mu$$

En variante on peut utiliser un seul moyenneur analogique au lieu des deux moyenneurs 12 et 13 précédents en le connectant de manière qu'il réalise directement la soustraction M2 - M1, ceci en inversant le signal d'un échantillon sur deux. Ou y gagne en simplicité, mais alors on perd le bénéfice du critère de validité lors de la mesure de X.

Avec ce circuit échantillonneur-bloqueur analogique il subsiste un effet de trainage d'une mesure sur la suivante qui est dû au fait que le condensateur C est initialement chargé. Cet inconvénient peut être éliminé en préchargeant le condensateur à une tension convenue à l'avance, par exemple 0 ou Vm/2, et en corrigeant l'erreur en conséquence.

Une variante plus intéressante consiste à modifier le signal d'échantillonnage de telle manière que le premier top soit allongé au-delà de la constante de temps des moyenneurs, comme représenté sur la figure 14. Cette variante permet d'accélérer la détection et la mesure en diminuant le nombre d'échantillons nécessaire à la détermination de la moyenne.

Enfin, il doit être compris que le terme "moyenne" utilisé dans la description qui précède doit être entendu dans un sens large et couvre aussi bien une moyenne arithmétique qu'une moyenne selon le critère des moindres carrés, ou autre méthode analogue.

## Revendications

1. Procédé de détermination des coordonnées (X, Y) d'une zone de contact (8) d'un objet conducteur tel qu'un doigt sur une surface sensible constituée par un support isolant comportant d'une part une grille formée de deux bornes (A, B) entre lesquelles sont montées en parallèle un certain nombre de bandes résistant es émettrices (1), et d'autre part des bandes conductrices détectrices (2), intercalées avec les bandes résistantes et réunies séparément à un moyen de sélection (3) suivant lequel on polaris a ternativement lesdites bandes émettrices dans un premier sens et dans le sens opposé, on effectue, pour les deux sens de polarisation des bandes émettrices, un certain nombre de mesures de la tension de chaque bande détectrice dont on calcule séparément les moyennes, et on déduit les coordonnées dudit objet de la comparaison des moyennes obtenues, caractérisé en ce que :

a) dans une première phase on polarise les deux bornes (A, B) de la grille en concordance de phase avec un signal d'horloge, on réalise un échantillonage synchrone de la tension de chaque bande détectrice, alternativement pour les période d'interruption (M1 (i) ) et d'établis sement (M2 (i) ) du signal d'horloge, on effectue les moyennes (M1, M2) d'un certain nombre d'échantillons, séparément pour les périodes d'interruption et d'établissement, et l'on compare les deux moyennes ainsi obtenues pour détecter s'il y a contact et déterminer la coordonnée numérique (Y) par le numéro (n) de la bande où est détecté le contact, puis

b) dans une deuxième phase, en laissant le moyen de sélection commuté sur cette même bande détectrice (n) ainsi détectée, on polarise les deux bornes (A, B) de la grille en opposition de phase entre elles par le signal d'horloge pour y créer alternativement un courant dans un sens et dans le sens opposé dans chaque bande résistante (1), on réalise un échantillonnage synchrone de la tension (M1 (i), M2 (i) ) de ladite bande détectrice (2), alternativement pour les deux sens de courant, on effectue la moyenne (M1, M2) d'un certain nombre d'échan tillons, séparément pour les deux sens de courant, et enfin on fait la différence de ces moyennes, qui sert à calculer la coordonnée analogique (X).

2. Procédé selon la revendication 1, caractérisé par le fait que dans la deuxième phase, on effectue également la somme des deux moyennes (M1 + M2) que l'on compare à la tension maximale (Vm) et que l'on valide le calcul de la coordonnée analogique (X) seulement si la valeur absolue de la différence entre ces deux valeurs est inférieure à un seuil déterminé.

3. Procédé selon une des revendications précédentes, caractérisé par le fait que, dans les deux phases du procédé, les moyennes (M1, M2) sont effectuées par conversion analogique/numérique de la tension (M1 (i), M2 (i) ) prélevée par le moyen de sélection, puis par un calcul arithmétique de moyenne sur les valeurs ainsi numérisées.

4. Procédé selon une des revendications 1 et 2, caractérisé par le fait que, dans les deux phases du procédé, les moyennes (M1, M2) sont effectuées par un filtrage passe-bas afin d'élaborer un signal moyen, puis une conversion analogique/numérique transformant le signal moyen en valeur utilisable pour la détection (Y) et pour le calcul (X).

5. Procédé selon une des revendications 1 et 2, caractérisé par le fait que, dans l'une au moins des phases du procédé, la moyenne est effectuée par un calcul du moindre carré sur les échantillons.

6. Procédé selon l'une des revendications précédentes, caractérisé par la fait que la fréquence d'échantillonnage est choisie parmi les premiers termes d'une série s'exprimant par 2.Fr/(n+1/2) où Fr est la fréquence du réseau de distribution et n un entier positif ou nul de faible valeur.

7. Procédé selon la revendication 4, caractérisé par le fait que le filtre passe-bas est agencé en échantillonneur-bloqueur dont la constante de temps est modifiée, par action sur le rapport cyclique des tops d'échantillonnage en vue d'un résultat optimal, dans chaque phase du procédé.

8. Procédé selon la revendication 4, caractérisé par le fait qu'un seul moyenneur est utilise pour accumuler, dans les deux phases du procédé, les deux types de mesure distincts, un des types étant appliqué en inversion de polarité par rapport à l'autre.

9. Dispositif de mise en oeuvre du procédé suivant l'une quelconque des revendications 1 à 8 pour la détermination des coordonnées (X, Y) d'une zone de contact (8) d'un corps conducteur tel qu'un doigt sur une surface sensible semianalogique, caractérisé par le fait qu'il comporte un générateur de signal d'horloge, des moyens formant commutateurs inverseurs (5, 6) susceptibles de commuter chacune des deux bornes (A, B) de la grille respectivement sur une tension de polarisation et à la masse, ces moyens formant commutateurs inverseurs (5, 6) étant commandables séparément en phase et en opposition de phase par le signal d'horloge, un dispositif d'échantillonnage synchrone avec le signal d'horloge, un dispositif d'élaboration de la moyenne sur un certain nombre (Im) d'échantillons, séparément pour les deux alternances du signal d'horloge, et un dispositif logique (10) qui commande les moyens formant commutateurs inverseurs (5, 6), ainsi que le moyen de sélection de bande (n) et le dispositif d'échantil lonnage (3), opère le comptage des échantillons (i) et détermine les valeurs des deux coordonnées (X, Y).

10. Dispositif selon la revendication 9, caractérisé par le fait que le dispositif d'élaboration de la moyenne comprend le dispositif logique (10) et un convertisseur analogique numérique (7) placé en amont de celui-ci.

11. Dispositif selon la revendication 9, caractérisé par le fait que le dispositif d'élaboration de la moyenne comprend au moins un moyenneur (12, 13) constitué par un moyen de filtrage passe-bas analogique disposé en amont d'un convertisseur analogique numérique (7), précédant lui-même le dispositif logique de commande (10).

## Patentansprüche

1. Verfahren zur Bestimmung der Koordinaten (X, Y) einer Kontaktzone (8) eines leitenden Objektes, wie eines Fingers auf einer empfindlichen Fläche, die aus einem isolierenden Träger besteht, der einerseits ein aus zwei Anschlüssen (A, B) gebildetes Gitter aufweist, zwischen denen parallel zueinander eine bestimmte Anzahl von emittierenden Widerstandsstreifen (1) angeordnet sind und andererseits leitende Meßstreifen (2), die zwischen den Widerstandsstreifen angeordnet sind und getrennt mit einer Wählanordnung (3) verbunden sind, mit der die emittierenden Streifen abwechselnd in einer Richtung oder in entgegengesetzter Richtung gepolt werden, wobei für die beiden Polrichtungen der emittierenden Streifen eine gewisse Anzahl von Spannungsmessungen für jeden Meßstreifen durchgeführt werden, von denen getrennt die Mittelwerte berechnet werden, wonach die Koordinaten des Objektes aus dem Vergleich der erhaltenen Mittelwerte abgeleitet werden, dadurch gekennzeichnet, daß:

a) in einem ersten Schritt die beiden Anschlüsse (A, B) des Gitters phasengleich mit einem Uhrsignal gepolt werden, daß eine synchrone Probenauswahl vorgenommen wird der Spannung eines jeden Meßstreifens abwechselnd für die Unterbrechungsdauer (M1 (i)) und Anlegedauer (M2 (i)) des Uhrsignals, daß die Mittelwerte (M1, M2) für eine bestimmte Anzahl von Proben ermittelt werden, getrennt für die Unterbrechungsdauern und die Anlegedauern und daß die beiden derart erhaltenen Mittelwerte miteinander verglichen werden, um festzustellen, ob ein Kontakt besteht und so die numerische Ordinate (Y) durch die Zahl (n) des Streifens festzustellen, an dem der Kontakt festgestellt wurde und daß

b) in einem zweiten Schritt unter Beibehaltung der Wählanordnung am gleichen bereits gemessenen Meßstreifen (n) die beiden Anschlüsse (A, B) des Gitters gegenphasig zueinander mit dem Uhrsignal gepolt werden, um in ihnen abwechselnd einen Strom in einer und in entgegengesetzter Richtung in jedem Widerstands streifen (1) zu erzeugen, wonach eine synchrone Probenauswahl der Spannung (M1 (i) , M2 (i) ) des Meßstreifens (2) erfolgt, abwechselnd für die beiden Stromrichtungen, daß der Mittelwert (M1, M2) einer bestimmten Anzahl von Proben ermittelt wird, getrennt für die beiden Stromrichtungen, und daß schließlich die Differenz dieser beiden Mittelwerte gebildet wird, um dergestalt die analoge Ordinate (X) zu berechnen.

2. Verfahren nach Anspruch 1, dadurch gekennzeichnet, daß während des zweiten Schrittes gleichzeitig die Summe der beiden Mittelwerte (M1 + M2) gebildet wird, die mit der Maximalspannung (Vm) verglichen wird, wonach die Berechnung der analogen Koordinate (X) nur dann anerkannt wird, wenn der Absolutwert der Differenz zwischen diesen beiden Werten kleiner ist als ein vorgegebener Schwellwert.

3. Verfahren nach einem der vorhergehenden Ansprüche, dadurch gekennzeichnet, daß während des zweiten Schrittes des Verfahrens die Mittelwerte (M1, M2) erhalten werden durch analoge/digitale Umwandlung der Spannung (M1 (i), M2 (i) ), die an der Wählanordnung abgegriffen wurde und anschließender arithmetischer Berechnung des Mittelwertes aus den derart digitalisierten Werten.

4. Verfahren nach einem der Ansprüche 1 und 2, dadurch gekennzeichnet, daß in den beiden Verfahrensschritten die Mittelwerte (M1, M2) gebildet werden durch Tiefpaßfilterung, anschließendes Erzeugen eines mittleren Signals, anschließende analoge/digitale Umwandlung, die das Mittelwertsignal in einen Wert umwandelt, der zur Messung von (Y) und zur Berechnung von (X) geeignet ist.

5. Verfahren nach einem der Ansprüche 1 und 2, dadurch gekennzeichnet, daß während wenigstens einer der beiden Verfahrensschritte der Mittelwert gebildet wird mittels einer Berechnungsmethode, die eine Quadrierung der Proben enthält.

6. Verfahren nach einem der vorhergehenden Ansprüche, dadurch gekennzeichnet, daß die Frequenz der Probenauswahl ausgewählt wird aus den ersten Gliedern einer Formel des Ausdrucks 2. Fr/(n + 1/2), in der Fr die Frequenz des Netzes ist und n Null oder eine ganze positive Zahl geringen Wertes ist.

7. Verfahren nach Anspruch 4, dadurch gekennzeichnet, daß das Tiefpaßf ilter als Probennehmer-Blockierer ausgestaltet ist, dessen Zeitkonstante verändert ist durch Einwirkung auf das zyklische Verhältnis der Probenauswahlmeßsignale im Hinblick auf ein optimales Resultat in jedem Verfahrensschritt.

8. Verfahren nach Anspruch 4, dadurch gekennzeichnet, daß ein einziger Mittelwertbildner verwendet wird, um in den beiden Verfahrensschritten die beiden verschiedenen Meßarten zu akkumulieren, wobei in der einen Art die Polarität umgekehrt wird.

9. Vorrichtung zur Durchführung des Verfahrens nach einem der Ansprüche 1 bis 8, zur Bestimmung der Koordinaten (X, Y) einer Kontaktzone (8) eines leitenden Körpers, wie eines Fingers auf einer halbanalogen empfindlichen Fläche, dadurch gekennzeichnet, daß sie einen Uhrsignalgenerator aufweist, eine Umschaltanordnung (5, 6), um jeden der beiden Anschlüsse (A, B) des Gitters mit einer Polarisationsspannung bzw. mit der Masse zu verbinden, wobei die Umschaltanordnung (5, 6) getrennt phasengleich und gegenphasig vom Uhrsignal steuerbar ist, eine Anordnung zur synchronen Probenauswahl mit dem Uhrsignal aufweist, eine Anordnung zur Erzeugung des Mittelwertes einer bestimmten Anzahl (Im) von Proben getrennt für die beiden Halbwellen des Uhrsignals und eine logische Anordnung (10), die die Umschaltanordnung (5, 6) steuert sowie die Auswahlanordnung für den Streifen In) und die Anordnung zur Probenauswahl (3) und die die Proben (i) zählt und die Werte der beiden Koordinaten (X, Y) bestimmt.

10. Vorrichtung nach Anspruch 9, dadurch gekennzeichnet, daß die Vorrichtung zur Bildung des Mittelwertes die logische Anordnung (10) aufweist sowie einen Analog-Digital-Umwandler (7), der vor letzterer angeordnet ist.

11. Vorrichtung nach Anspruch 9, dadurch gekennzeichnet, daß die Anordnung zur Bildung des Mittelwertes wenigstens einen Mittelwertbildner (12, 13) aufweist, der aus einer analogen Tiefpaßfilteranordnung besteht, die vor einen Analog-Digital-Wandler (7) angeordnet ist, der wiederum vor der logischen Steueranordnung (10) angeordnet ist.

**Claims**

1. A process for determining the coordinates (X, Y) of a contact zone (8) of a conducting object such as a finger on a sensitive surface foreed by an insulating support comprising on the one hand a grid formed by two terminals (A, B) between which a certain number of resistant emitter strips (1) are mounted in parallel, and on the other hand conducting detector strips (2) which are in interposed relationship with the resistant strips and which are joined separately to a selection means (3), comprising alternately biasing said emitter strips in a first direction and in the opposite direction, effecting for the two directions of biasing of the emitter strips, a certain number of measurement operations in respect of the voltage of each detector strip, the averages of which are calculated separately, and deducing the co-ordinates of said object from comparison of the averages obtained, characterised by:

a) in a first phase, biasing the two terminals (A, B) of the grid in phase concordance with a clock signal, effecting synchronous sampling of the voltage of each detector strip alternately for the periods (M1 (i)) in which the clock signal is interrupted and the periods (M2 (i)) in which the clock signal is established, producing the averages (M1, M2) of a certain number of samplings separately for the clock signal interruption and establisment periods, and comparing the two averages obtained in that way to detect if there is contact and to determine the digital coordinate (Y) by the number (n) of the strip where contact is detected, and then

b) in a second phase, leaving the selection means switched to said same detector strip (n) which is detected in that way, biasing the two terminals (A, B) of the grid in phase opposition relative to each other by the clock signal in order to generate alternately therein a current in one direction and in the opposite direction in each resistant strip (1), effecting synchronous sampling of the voltage (M1 (i), M2 (i)) of said detector strip (2) alternately for the two current directions, producing the average (M1, M2) of a certain number of sampling separately for the two current directions, and finally producing the difference of said averages, which is used to calculate the analog co-ordinate (X).

2. A process according to claim 1 characterised by also producing in the second phase the sum of the two averages (M1 + M2), comparing same to the maximum voltage (Vm) and validating calculation of the analog coordinate (X) only if the absolute value of the difference between those two values is lower than a given threshold.

3. A process according to one of the preceding claim characterised in that in the two phases of the process the averages (M1, M2) are produced by analog/digital conversion of the voltage (M1 (i), M2 (i)) which is taken off by the selection means, and then by arithmetic average calculation on the values which are digitised in that way.

4. A process according to one of claims 1 and 2 characterised in that in the two phases of the process the averages (M1, M2) are produced by low pass filtering in order to produce an average signal, then analog/digital conversion for transforming the average signal into a value which can be used for detection (Y) and for calculation (X).

5. A process according to one of claims 1 and 2 caaracterised in that in one at least of the phases of the process the average is produced by calculation of the least square on the samplings.

6. A process according to one of the preceding claims characterised in that the sampling frequency is selected from the first terms of a series expressed by $2.Fr/(n+1/2)$ in which Fr is the frequency of the distribution network and n is a positive integer or zero, of low value.

7. A process according to claim 4 characterised in that the low pass filter is arranged as a sample-hold means whose time constant is modified by acting on the duty factor of the sampling pips for an optimum result in each phase of the process.

8. A process according to claim 4 caaracterised in that a single averaging means is used for accumulating the two different types of measurmeant in the two phases of the process, one of the types being applied with reversal of polarity relative to the other.

9. Apparatus for carrying out the process according to any one of claims 1 to 8 for determining the co- ordinates (X, Y) of a contact zone (8) of a conducting body such as a finger on a semi-analog sensitive surface characterised in that it comprises a clock signal generator, means forming change-over switches (5, 6) which are capable of switching each of the two terminals (A, B) of the grid respectively to a biasing voltage and to earth, said means forming change-over switches (5, 6) being capable of being controlled separately in phase and in phase opposition by the clock signal, a means for sampling synchronously with the clock signal, a means for producing the average over a certain number (Im) of samplings, separately for the two alternations of the clock signal, and a logic means (10) which controls the means forming change-over switches (5, 6) as well as the means for selection of a strip (n) and the sampling means (3) effects counting of the samplings (i) and determines the values of the two co-ordinates (X, Y).

10. Apparatus according to claim 9 characterised in that the average producing means comprises the logic means (10) and an analogdigital converter (7) disposed upstream thereof.

11. Apparatus according to claim 9 characterised in that the average producing means crises at least one averaging means (12, 13) formed by an analog low pass filtering means disposed upstream of an analog-digital converter (7) which itself precedes the logic control means (10).

FIG.1

FIG.2

| SIGNAL | | a |
| CONTACT | | b |
| DETECTION | | c |
| ECHANTILLONNAGE 1 | | d |
| ECHANTILLONNAGE 2 | | e |
| VALEURS | | f |

FIG.3

PERIODE DE CYCLE

## FIG.4

SIGNAL ⟶ a

ECHANTILLONNAGE
BANDE 1 ↑SERIE PAIRE ↓SERIE IMPAIRE ⟶ b

BANDE 2 ⟶ c

BANDE n ⟶ d

## FIG.5

A ... B  +Vm

$X_1 = L\left(\dfrac{M_1}{V_m}\right)$

$M_1 = \left(\dfrac{X_1}{L}\right)V_m$

## FIG.6

+Vm ... B

$X_2 = L\left(1 - \dfrac{M_2}{V_m}\right)$

$M_2 = \left(1 - \dfrac{X_2}{L}\right)V_m$

## FIG.7

$V_A$
$V_m$
0 ⟶ t  a

$V_B$
$V_m$
t  b

$V_X$
VALEURS THEORIQUE
$V_m$
$M_2$
$M_1$
0 ⟶ t  c

⟶ t  d
TOPS ECHANTILLONS

$V_X$
MESURE
$M_2$
$M_1$
0 ⟶ t  e

# FIG.8

**(DEBUT)**

$$n \leftarrow 0$$

$$n \leftarrow n+1 \qquad i \leftarrow 0$$
CONNECTER BANDE n

$$i \leftarrow i+1$$
A $\leftarrow$ 0
B $\leftarrow$ 0 \qquad ECHANTILLON 1ms
M1 (i) $\leftarrow$ VALEUR MESUREE

A $\leftarrow$ +Vm
B $\leftarrow$ +Vm \qquad ECHANTILLON 1ms
M2 (i) $\leftarrow$ VALEUR MESUREE

NON $\quad$ i=Im

OUI

M1 $\leftarrow$ MOYENNE M1 (i)
M2 $\leftarrow$ MOYENNE M2 (i)

<SEUIL $\quad$ M2-M1

(PAS CONTACT)

$\geqslant$ SEUIL

CONTACT DETECTE; $\quad$ y $\leftarrow$ n
BANDE n RESTE CONNECTEE

$$i \leftarrow 0$$

$$i \leftarrow i+1$$
A $\leftarrow$ 0
B $\leftarrow$ +Vm \qquad ECHANTILLON 1ms
M1(i) $\leftarrow$ VALEUR MESUREE

A $\leftarrow$ +Vm
B $\leftarrow$ 0 \qquad ECHANTILLON 1ms
M2(i) $\leftarrow$ VALEUR MESUREE

NON $\quad$ i=Im

OUI

M1 $\leftarrow$ MOYENNE M1(i)
M2 $\leftarrow$ MOYENNE M2(i)

>SEUIL $\quad$ $|M1+M2-Vm|$

(ERREUR)

$\leqslant$ SEUIL

$$X \leftarrow \frac{L}{2}\left(1 - \frac{M2-M1}{Vm}\right)$$

$\bullet$ FIN

5

## FIG.9

+V

MULTIPLEXEUR → 4 → CONVERTISSEUR A/N → μP + MEMOIRE → RESULTAT

ADRESSAGE   START/LECTURE   COMMANDES

## FIG.10

RESULTAT X,Y

+Vmax

MULTIPLEXEUR → MOYENNEUR 1 / MOYENNEUR 2 → CONV. A/N → μP

SELECTION DE BANDE   SYNCHRONISATION   START ET LECTURE

COMMANDE DES INTERRUPTEURS

## FIG.11

ENTREE → 1 → 14 → 1 → SORTIE

COMMANDE ECHANTILLONNAGE BLOCAGE

R

C

## FIG.12

ECHANTILLONNAGE  ·  BLOCAGE
$t_e$  $t_b$  a

ENTREE CONSTANTE
VALEUR DE LA SORTIE
b

## FIG.13

SIGNAL
$t_e$  $t_b$
ECHANTILLONNAGE 1
ECHANTILLONNAGE 2
SORTIE FILTRE 1  M1
SORTIE FILTRE 2  M2

## FIG.14

SIGNAL
ECHANTILLONNAGE MODIFIE
SORTIE DU MOYENNEUR  $\Delta t = R \times C$

9